(19) Europäisches Patentamt
European Patent Office
Office européen des brevets

(11) Veröffentlichungsnummer: **0 207 369 B1**

(12) **EUROPÄISCHE PATENTSCHRIFT**

(45) Veröffentlichungstag der Patentschrift: **10.04.91**

(51) Int. Cl.5: **C08L 69/00**, C08K 5/51,
//(C08L69/00,25:02,27:18,51:00)

(21) Anmeldenummer: **86108292.3**

(22) Anmeldetag: **18.06.86**

Die Akte enthält technische Angaben, die nach dem Eingang der Anmeldung eingereicht wurden und die nicht in dieser Patentschrift enthalten sind.

(54) **Thermoplastische Polycarbonatformmassen.**

(30) Priorität: **29.06.85 DE 3523314**

(43) Veröffentlichungstag der Anmeldung:
**07.01.87 Patentblatt 87/02**

(45) Bekanntmachung des Hinweises auf die Patenterteilung:
**10.04.91 Patentblatt 91/15**

(84) Benannte Vertragsstaaten:
**DE FR GB IT NL**

(56) Entgegenhaltungen:
**EP-A- 0 103 230**
**EP-A- 0 131 751**
**EP-A- 0 174 493**
**FR-A- 2 239 512**

(73) Patentinhaber: **BAYER AG**
**W-5090 Leverkusen 1 Bayerwerk(DE)**

(72) Erfinder: **Kress, Hans-Jürgen, Dr.**
**Scheiblerstrasse 111**
**W-4150 Krefeld(DE)**
Erfinder: **Müller, Friedemann, Dr.**
**Am Steinacker 5**
**W-4040 Neuss 21(DE)**
Erfinder: **Lindner, Christian, Dr.**
**Riehler Strasse 200**
**W-5000 Köln 60(DE)**
Erfinder: **Peters, Horst, Dr.**
**Winterberg 25**
**W-5090 Leverkusen 3(DE)**
Erfinder: **Buekers, Josef**
**Kneinstrasse 58a**
**W-4150 Krefeld(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Gegenstand der vorliegenden Erfindung sind schlagzähe, flammwidrige thermoplastische Polycarbonatformmassen, bestehend aus

A. 60 bis 90 Gew.-% eines thermomplastischen, halogenfreien aromatischen Polycarbonats

B. 10 bis 40 Gew.-% eines halogenfreien thermoplastischen Copolymerisats aus 50 bis 95 Gew.-% Styrol, α-Methylstyrol, kernsubstituiertem Styrol oder Mischungen daraus und 5 bis 50 Gew.-% (Meth)-Acrylnitril

C. 1 bis 15 Gew.-Teilen, vorzugsweise 5 bis 15 Gew.-Teilen, bezogen auf 100 Gew.-Teile Gesamtgewicht aus A. und B., einer halogenfreien Phosphorverbindung der Formel (I),

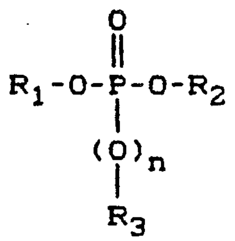

(I)

worin $R_1$, $R_2$ und $R_3$ unabhängig voneinander $C_1$-$C_8$-Alkyl oder gegebenenfalls alkylsubstituiertes $C_6$-$C_{20}$-Aryl sind und "n" für 0 oder 1 steht und

D. 0,05 bis 2,0 Gew.-Teilen, insbesondere 0,1 bis 1,0 Gew.-Teil, bezogen auf 100 Gew.-Teile Gesamtgewicht aus A. und B., eines Tetrafluorethylenpolymerisats mit Flüorgehalten von 65-76 Gew.-%, mit mittleren Teilchengrößen von 0,05 bis 20 μm und einer Dichte von 1,2 bis 1,9 g/cm³, wobei die Komponente D. in Form einer koagulierten Mischung von Emulsionen der Tetrafluorethylenpolymerisate D. mit Emulsionen von maximal 3,1 Gew.-Teilen, mindestens jedoch 0,1 Gew.-Teilen, bezogen auf 100 Gew.-Teile der Summe der Komponenten A. und B., Pfropfpolymerisaten E aus

E.1. 5 bis 90 Gew.-Teilen, vorzugsweise 30 bis 80 Gew.-Teilen, einer Mischung aus

E.1.1 50 bis 95 Gew.-% Styrol, α-Methylstyrol, kernsubstituiertem Styrol, Methylmethacrylat oder Mischungen daraus und

E.1.2 50 bis 5 Gew.-% (Meth)-Acrylnitril, Methylmethacrylat, Maleinsäureanhydrid, N-substituiertem Maleinimid oder Mischungen daraus, auf

E.2. 95 bis 10 Gew.-Teilen, vorzugsweise 70 bis 20 Gew.-Teilen, eines Kautschuks mit einer Glastemperatur $T_{TG} \leq 10\,^{\circ}C$,

eingesetzt wird, und wobei das Gewichtsverhältnis Pfropfpolymerisat E. zum Tetrafluorethylenpolymerisat D. zwischen 95:5 und 60:40 liegt,

sowie gegebenenfalls wirksamen Mengen an Stabilisatoren, Pigmenten, Fließmitteln, Entformungsmitteln und/oder Antistatika.

Gemäß der DE-OS 2 228 072 werden thermoplastische Polycarbonate mit einem Gemisch aus Hexabrombenzol und einer Antimonverbindung flammwidrig eingestellt, welche zusätzlich einen Phosphatester als Synergisten enthalten können. Der alleinige Zusatz von 10 Gew.-Teilen Triphenylphosphat zu Bisphenol A-Polycarbonat hat allerdings keine Antitropfwirkung gemäß Entflammungstest U.L. Subj. 94 (siehe Seite 20 der DE-OS 2 228 072).

GB-PS 1 459 648 beschreibt flammwidrige, nichttropfende Polymere, beispielsweise aus ABS-Polymeren oder aus Polycarbonaten, denen ein Flammschutzadditiv, wie beispielsweise Triphenylphosphat, ein nicht-brennbares Fasermaterial und Polytetrafluorethylenharz zugemischt worden sind. Das Beispiel 2 des GB-PS 1 459 648 zeigt, daß Polytetrafluorethylenharz ohne Faserzusatz nicht das Tropfen verhindert.

Aus der DE-OS 2 434 085 sind verschäumbare thermoplastische Kunststoffe bekannt, wobei als Thermoplasten unter anderem Polycarbonate, Polymerisate oder Mischungen davon genannt sind. Als Polymerisate sind auch solche aus Butadien, Styrol und Acrylnitril oder aus Styrol allein genannt. Als Flammschutzmittel können die verschäumbaren Kunststoffe Phosphatester enthalten, gegebenenfalls in Kombination mit Halogenverbindungen. Als Halogenverbindungen sind keine Polytetrafluorethylenpolymerisate empfohlen.

Gemäß DE-OS 2 921 325 ist der Zusatz von Pentaerythritdiphosphaten und -diphosphonaten als Flammschutzmittel für Polycarbonate beschrieben, wobei zusätzlich Halogenverbindungen mitverwendet werden können, die gemäß der auf Seite 9 der DE-OS 2 921 325 zitierten US-Patentschrift 3 392 136 auch

Polyvinylidenfluoride sein können. Den Polycarbonaten können ABS-Copolymerisate zugemischt sein.

Aus US-PS 4 355 126 und 4 107 232 sind unter anderem flammwidrige ABS-Polymerisate bekannt, die Polytetrafluorethylene enthalten. Als Flammschutzmittel ist Triphenylphosphat besonders bevorzugt.

Aus den DE-OS 2 903 100 und 2 918 883 sind flammwidrige Mischungen aus Polycarbonaten, ABS-Polymerisaten und Halogenverbindungen bekannt. Gemäß DE-OS 2 903 100 wird die Flammwidrigkeit durch spezielle organische Sulfonate erreicht. Fluorierte Polyolefine können als tropfhemmende Mittel zugesetzt werden. Gemäß DE-OS 2 918 883 wird die Flammwidrigkeit durch Alkali- oder Erdalkalisalze von Säuren in Kombination mit Antitropfmitteln erreicht, wobei die ABS-Polymerisate nur maximal 10 Gew.-%, bezogen auf Gesamtmischung, betragen.

Bekannt sind auch flammwidrige Polymermischungen, die neben Polytetrafluorethylenen und organischen Halogenverbindungen Polyphosphate mit Molekulargewichten Mw von 1600 bis 150 000 in Mengen von 1 bis 35 Gew.-% enthalten (EP-A 0 103 230). Die Polycarbonate dieser Formmassen sind jedoch überwiegend aus tetramethylierten Diphenolen aufgebaut.

Aus der DE-OS 3 322 260 (=EP-A-131751) sind flammwidrige thermoplastische Formmassen bekannt, die

(a) aromatische Polycarbonate,
(b) SAN-Pfropfpolymerisate,
(c) thermoplastische Polymerisate,
(d) gegebenenfalls Halogenverbindungen,
(e) Antimontrioxid, Antimoncarbonat, Wismuttrioxid oder Wismutcarbonat und
(f) feinteiliges Tetrafluorethylenpolymerisat

enthalten, wobei dieses über eine wäßrige Emulsion des SAN-Pfropfpolymerisats (b) und gegebenenfalls eine wäßrige Emulsion des thermoplastischen Polymerisats (c) in die Formmasse eingebracht wird, wodurch gute Oberflächen der Formmassen erzielt werden. Gemäß Seite 16 dieser DE-OS läßt sich dieses Prinzip der Einarbeitung von Tetrafluorethylenpolymerisation auf alle Polycarbonat-haltigen Formmassen übertragen.

Bezüglich der schwierigen Verarbeitung von Polytetrafluorethylenen sei noch auf FR-PS 1 412 767 verwiesen, bezüglich der Einarbeitung von Polytetrafluorethylenen in Thermoplaste, wie aromatische Polycarbonate oder Polymerisate von ungesättigten Monomeren sei noch auf US-PS 3 294 871 hingewiesen, sowie auf US-PS 3 005 795, insbesondere Spalten 3/4, wo Fällung und Koagulation erwähnt sind.

Die erfindungsgemäßen Formmassen zeichnen sich durch gute Schlagzähigkeit, Oberflächenbeschaffenheit und hohe Flammwidrigkeit aus, ohne die in der üblichen Brandschatztechnologie verwendeten Halogen- und Metallverbindungen zu beinhalten.

Erfindungsgemäß geeignete, thermoplastische, halogenfreie aromatische Polycarbonate gemäß Komponente A. sind solche auf Basis der Diphenole der Formel II

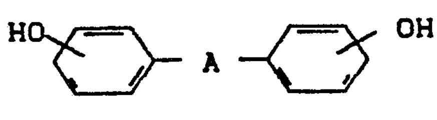

(II),

worin A eine Einfachbindung, $C_1$-$C_5$-Alkylen, $C_2$-$C_5$-Alkyliden, $C_5$-$C_6$-Cycloalkyliden, -S- oder -$SO_2$- ist.

Geeignete Diphenole der Formel II sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan oder 1,1-Bis-(4-hydroxyphenyl)-cyclohexan.

Bevorzugte Diphenole der Formel II sind 2,2-Bis-(4-hydroxyphenyl)-propan und 1,1-Bis-(4-hydroxyphenyl)-cyclohexan.

Die Diphenole der Formel II sind entweder literaturbekannt oder nach literaturbekanntem Verfahren herstellbar.

Die Herstellung der erfindungsgemäß geeigneten Polycarbonate gemäß Komponente A. ist literaturbekannt und kann beispielsweise mit Phosgen nach dem Phasengrenzflächenverfahren oder mit Phosgen nach den Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. Geeignete Kettenabbrecher sind beispielsweise Monophenole wie Phenol selbst, p-Kresol, p-tert.-Butylphenol und p-Isooctylphenol.

Die erfindungsgemäß geeigneten Polycarbonate gemäß Komponente A. haben mittlere Gewichtsmolekulargewichte (Mw, gemessen beispielsweise durch Ultrazentrifugation oder durch Streulichtmessung) von

10 000 bis 100 000, vorzugsweise von 20 000 bis 80 000.

Die erfindungsgemäß geeigneten Polycarbonate gemäß Komponente A. sind sowohl Homopolycarbonate als auch Copolycarbonate.

Die erfindungsgemäß geeigneten Polycarbonate gemäß Komponente A. können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne der vorliegenden Erfindung.

Erfindungsgemäß geeignete halogenfreie, thermoplastische Copolymerisate gemäß Komponente B. sind harzartig, thermoplastisch und kautschukfrei. Besonders bevorzugte Polymerisate B. sind solche aus Styrol und/oder $\alpha$-Methylstyrol mit Acrylnitril. Unter kernsubstituierten Styrolen sind kernalkylierte Styrole wie z.B. p-Methylstyrol zu verstehen.

Besonders bevorzugte Gewichtsverhältnisse im thermoplastischen Polymerisat B. sind 60 bis 80 Gew.-% Styrol, $\alpha$-Methylstyrol, kernsubstituiertes Styrol oder Mischungen daraus und 40 bis 20 Gew.-% Acrylnitril.

Die Polymerisate gemäß Komponente B. sind bekannt und lassen sich durch radikalische Polymerisation, insbesondere durch Emulsions-, Suspensions-, Lösungs- oder Massepolymerisation herstellen. Die Polymerisate gemäß Komponente B. besitzen vorzugsweise Molekulargewichte Mw (Gewichtsmittel, ermittelt durch Lichtstreuung oder Sedimentation) zwischen 15 000 und 200 000.

Die erfindungsgemäß geeigneten halogenfreien Phosphorverbindungen gemäß Komponente C. sind generell bekannt (siehe beispielsweise Ullmann, Enzyklopädie der technischen Chemie, Bd. 18, S. 301ff, 1979; Houben-Weyl, Methoden der Organischen Chemie, Bd. 12/1, S. 43; Beilstein, Bd. 6, S. 177).

Erfindungsgemäß geeignete Phosphorverbindungen gemäß Komponente C., Formel (I), sind beispielsweise Triphenylphosphat, Trikresylphosphat, Diphenyl-2-ethylkresylphosphat, Tri-(iso-propylphenyl)-phosphat, Methylphosphonsäurediphenylester oder Phenylphosphonsäurediethylester.

Die erfindungsgemäß geeigneten Tetrafluorethylenpolymerisate gemäß Komponente D. sind Polymere mit Fluorgehalten von 65 bis 76 Gew.-%, vorzugsweise 70 bis 76 Gew.-%. Beispiele sind Polytetrafluorethylen, Tetrafluorethylen-Hexafluorpropylen-Copolymere oder Tetrafluorethylen-Copolymerisate mit geringen Mengen fluorfreier, copolymerisierbarer, ethylenisch ungesättigter Monomerer.

Derartige Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium oder Ammoniumperoxiddisulfat bei Drucken von 7 bis 71 $kg/cm^2$ und bei Temperaturen von 0 bis 200° C, vorzugsweise bei Temperaturen von 20 bis 100° C (US-PS 2 393 967).

Die Teilchengröße der erfindungsgemäßen Tetrafluorethylenpolymerisate liegt im Bereich von 0,05 bis 20 $\mu m$ und die Dichte im Bereich von 1,2 bis 1,9 $g/cm^3$.

Durch den Zusatz von Tetrafluorethylenpolymerisaten wird insbesondere das Abtropfen der Formmassenschmelze während des Brandvorganges reduziert oder ganz verhindert.

Stellt man nun die erfindungsgemäßen Formmassen beispielsweise durch Schmelzcompoundierung in Knetern oder Extrudern aus Granulaten oder Pulvern der Komponenten A. bis C. sowie einem Polytetrafluorethylen-Pulver her, das eine Teilchengröße und Dichte besitzt, die größer als der erfindungsgemäße Bereich sind, so werden zwar Formmassen hoher Flammwidrigkeit erhalten, Formkörper daraus haben aber manchmal eine mangelhafte Oberfläche, beispielsweise Mikrorisse oder Schlieren.

Das wird mit Sicherheit vermieden, wenn die sehr feinteiligen und zudem ungesinterten Tetrafluorethylenpolymerisate in Form einer koagulierten Mischung von Emulsionen der Tetrafluorethylenpolymerisate D. mit Emulsionen der Pfropfpolymerisate E. eingesetzt werden.

Zur Herstellung einer entsprechenden Mischung wird zuerst eine wäßrige Emulsion (Latex) eines Pfropfpolymerisates E. mit mittleren Latexteilchengrößen von 0,1 bis 2 $\mu m$, insbesondere 0,2 bis 0,6 $\mu m$, mit einer feinteiligen Emulsion eines Tetrafluorethylenpolymerisates in Wasser mit mittleren Teilchengrößen von 0,05 bis 20 $\mu m$, insbesondere von 0,08 bis 10 $\mu m$ vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate E. besitzen Feststoffgehalte von 25 bis 60 Gew.-%,

insbesondere von 30 bis 45 Gew.-%.

In der Emulsionsmischung liegt das Gewichtsverhältnis Pfropfpolymerisat E. zum Tetrafluorethylenpolymerisat D. zwischen 95:5 und 60:40. Anschließend wird die Emulsionsmischung in bekannter Weise koaguliert, beispielsweise durch Sprühtrocknung, Gefriertrocknung oder Koagulation mittels Zusatz von anorganischen oder organischen Salzen, Säuren, Basen oder organischen, mit Wasser mischbaren Lösungsmitteln, wie Alkoholen, Ketonen, vorzugsweise bei Temperaturen von 20 bis 150 °C, insbesondere von 50 bis 100 °C. Falls erforderlich, kann bei 50 bis 200 °C, bevorzugt 70 bis 100 °C getrocknet werden.

Geeignete Tetrafluorethylenpolymerisat-Emulsionen sind handelsübliche Produkte und werden beispielsweise von der Firma DuPont als Teflon® 30 N angeboten.

Zur Herstellung der Pfropfpolymerisate gemäß Komponente E. geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat oder Ethylmethacrylat). Ein weiterer geeigneter Kautschuk ist beispielsweise Polyisopren. Geeignet sind weiterhin Alkylacrylatkautschuke auf der Basis von $C_1$-$C_8$-Alkylacrylaten, insbesondere Ethyl-, Butyl-, Ethylhexylacrylat.

Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkende ethylenisch ungesättigte Monomere enthalten. Solche Vernetzer sind zum Beispiel Alkylendioldi(meth)-acrylate, Polyesterdi-(meth)-acrylate, Divinylbenzol, Tri-Vinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Diens mit einem ethylenisch ungesättigten Monomer, wie Styrol und/oder Acrylnitril, als Kern enthalten. Andere geeignete Kautschuke sind zum Beispiel EPDM-Kautschuke, also Kautschuke aus Ethylen, Propylen und einem unkonjugierten Dienmonomer.

Bevorzugte Kautschuke zur Herstellung der Pfropfpolymerisate E. sind Dien- und Alkylacrylatkautschuke.

Die Kautschuke liegen in den Pfropfpolymerisaten E. in Form wenigstens partiell vernetzter Teilchen einer mittleren Teilchengröße von 0,1 bis 2,0 µm, insbesondere 0,2 bis 0,6 µm vor.

Die Pfropfpolymerisate E. werden durch radikalische Pfropfcopolymerisation der eingangs definierten Monomerengemische aus E.1.1 und E.1.2 in Gegenwart der zu pfropfenden Kautschuke E.2 hergestellt und sind durchweg bekannt. Bevorzugte Herstellungsverfahren für die Pfropfpolymerisate E. sind Emulsions-, Lösungs-, Masse- oder Suspensionspolymerisation. Besonders bevorzugte Pfropfpolymerisate E. sind die sogenannten ABS-Polymerisate. Als kernsubstituiertes Styrol sei p-Methylstyrol erwähnt.

Da der Einsatz der erfindungsgemäß zu verwendenden Pfropfpolymerisate E. durch Vorabmischung ihrer Emulsionen mit Emulsionen der Komponente D. erfolgt, ist die Herstellung der Komponente E. nach dem Verfahren der Emulsionspolymerisation am zweckmäßigsten.

Die erfindungsgemäßen thermoplastischen Formmassen können weitere für Polycarbonate oder für die thermoplastischen Polymerisate bekannte Zusätze wie Stabilisatoren, Pigmente, Fließmittel, Entformungsmittel und/oder Antistatika enthalten.

Die erfindungsgemäßen Formmassen, bestehend aus den Komponenten A., B., C., D. und E. und gegebenenfalls weiteren bekannten Zusätzen wie Stabilisatoren, Pigmenten, Fließmitteln, Entformungsmittel und/oder Antistatika werden hergestellt, indem man die jeweiligen Bestandteile in bekannter Weise vermischt und danach bei Temperaturen von 200 bis 330 °C in üblichen Aggregaten wie Innerknetern oder Ein- oder Zweischneckenextrudern schmelzcompoundiert oder schmelzextrudiert, oder indem man Lösungen der jeweiligen Komponenten in geeigneten organischen Lösungsmitteln, beispielsweise in Chlorbenzol, mischt und die Lösungsgemische in gebräuchlichen Eindampfaggregaten, beispielsweise in Eindampfextrudern, eindampft.

Die Vermischung der einzelnen Bestandteile kann in bekannter Weise sowohl sukzessive als auch simultan erfolgen, und zwar sowohl bei etwa 20 °C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind:
Gehäuseteile jeder Art (z.B. für Haushaltsgeräte wie Kaffeemaschinen oder Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften besitzen.

Eine weitere Form der Verarbeitung ist die Herstellung von Formkörpern durch Tiefziehen oder Warmverformen zuvor durch Extrusion hergestellter Platten oder Folien.

Teilchengröße bedeutet immer mittlerer Teilchendurchmesser $d_{50}$, ermittelt durch Ultrazentrifugenmessungen nach W. Scholtan et al., Kolloid-Z. u. Z. Polymere 250 (1972) 782-796.

## Beispiele

Eingesetzte Legierungskomponenten

A. Polycarbonat aus 2,2-Bis-(4-hydroxyphenyl)-propan (Bisphenol A) mit einer relativen Lösungsviskosität von 1,280, gemessen in Methylenchlorid bei 23 °C und einer Konzentration von 0,5 Gew.-%.

B. Styrol/Acrylnitril-Copolymerisat mit einem Styrol-Acrylnitril-Verhältnis von 72:28 und einer Grenzviskosität von $[\eta]$ = 0,55 dl/g (Messung in Dimethylformamid bei 20 °C).

C. Triphenylphosphat

D1. Tetrafluorethylenpolymerisat als koagulierte Mischung aus einem SAN-Pfropfpolymerisat und einer Tetrafluorethylenpolymerisat-Emulsion in Wasser; Gehalt an Tetrafluorethylenpolymerisat in der Mischung: 10 Gew.-%, bezogen auf Mischung PTFE-SAN-Pfropfpolymerisat. Die Tetrafluorethylenpolymerisat-Emulsion besitzt einen Feststoffgehalt von 60 %; die Teilchengröße liegt zwischen 0,05 und 0,5 µm. Die SAN-Pfropfpolymerisat-Emulsion besitzt einen Feststoffgehalt von 34 Gew.-% und hat eine Latexteilchengröße von 0,3 bis 0,4 µm. Herstellung von D.1: Die Emulsion des Tetrafluorethylenpolymerisats wird mit der Emulsion des SAN-Pfropfpolymerisat E vermischt und mit 1,8 Gew.-%, bezogen auf Polymerfeststoff, phenolischer Antioxidantien stabilisiert, Bei 85 bis 95 °C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100 °C zu einem Pulver getrocknet. Dieses Pulver kann dann mit den weiteren Komponenten in den beschriebenen Aggregaten compoundiert werden.

D2. Tetrafluorethylenpolymerisat in Pulverform mit einer Teilchengröße von 500 bis 650 µm und einer Dichte von 2,18 bis 2,20 g/cm$^2$ der Firma Hoechst (Hostaflon TF 2026).

E. SAN-Pfropfpolymerisat von 50 Gew.-% Styrol-Acrylnitril-Gemisch (im Gew.-Verhältnis von 72:28) auf 50 Gew.-% teilchenförmiges Polybutadien mit einer mittleren Teilchengröße ($d_{50}$) von 0,3-0,4 µm, erhalten durch Emulsionspolymerisation.

Herstellung der erfindungsgemäßen Formmassen

Die Compoundierung der Komponenten A., B., C., D. und E. erfolgte auf einem Doppelwellenextruder (Werner und Pfleiderer) vom Typ ZSK 53 bei einer Temperatur von 230 °C.

Die Herstellung von Formkörpern erfolgte auf einer Spritzgußmaschine bei 260 °C.

Das Brandverhalten der Proben wurde nach UL-Subj. 94 V in Prüfkörperdicken von 1,6 mm gemessen. Der UL-94-Test wird wie folgt durchgeführt:

Substanzproben werden zu Stäben der Abmessungen 127 x 12,7 x 1,6 mm geformt. Die Stäbe werden vertikal so montiert, daß die Unterseite des Probekörpers sich 305 mm über einen Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 x 10$^4$ kJ/m$^3$ (1,000 BTU per cubic foot) benutzt.

Die UL-94 V-O-Klassifizierung umfaßt die nachstehend beschriebenen Eigenschaften von Materialien, die gemäß der UL-94-Vorschrift geprüft wurden. Die Polycarbonatformmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probensatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL-94-Klassifizierungen bezeichnen Proben, die weniger flammwidrig und selbstverlöschend sind und die flammende Tropfen oder Teilchen abgeben. Diese Klassifizierungen werden mit UL-94 V-1 und V-2 bezeichnet. N. b. heißt "nicht bestanden" und ist die Klassifizierung von Proben die eine Nachbrennzeit von > 30 s aufweisen.

Die Beurteilung der Formkörperoberfläche in bezug auf Oberflächenstörungen wie Schlieren erfolgte visuell an Prüfkörpern der Abmessung 127 x 127 x 1,6 mm.

Die Bestimmung der Kerbschlagzähigkeit sowie der Schlagzähigkeit erfolgte in Ablehnung an DIN 53 453/ISO R 179 an Stäben der Abmessung 90 x 10 x 4 mm, wobei für die Kerbschlagzähigkeit die Stäbe mit einer V-förmigen Kerbe der Kerbtiefe 2,7 mm versehen wurden.

Aus der folgenden Tabelle können die genauen Zusammensetzungen der geprüften Formmasse sowie die erhaltenen Prüfdaten entnommen werden.

| A Gew.-Tl. | B Gew.-Tl. | C Gew.-Tl. | D1 Gew.-Tl. | D2 Gew.-Tl | UL-94 V 3,2 mm | UL-94 V 1,2 mm | Kerbschlag-zähigkeit | Schlagzähig-keit | Ober-flächen-beschaffen-heit |
|---|---|---|---|---|---|---|---|---|---|
| erfindungsgemäßer Versuch | | | | | | | | | |
| 65,2 | 21,8 | 10 | 3,0 | | VO | VO | 5 | n.g.* | schlieren-frei |

n.g.* = nicht gebrochen

## Ansprüche

**1.** Thermoplastische Formmassen bestehend aus

A. 60 bis 90 Gew.-% eines thermomplastischen, halogenfreien aromatischen Polycarbonats

B. 10 bis 40 Gew.-% eines halogenfreien thermoplastischen Copolymerisats aus 50 bis 95 Gew.-% Styrol, $\alpha$-Methylstyrol, kernsubstituiertem Styrol oder Mischungen daraus und 5 bis 50 Gew.-% (Meth)-Acrylnitril

C. 1 bis 15 Gew.-Teilen, bezogen auf 100 Gew.-Teile, Gesamtgewicht aus A. und B., einer halogenfreien Phosphorverbindung der Formel (I),

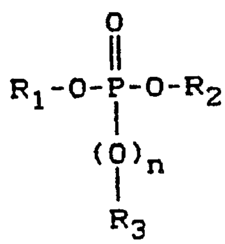

(I)

worin $R_1$, $R_2$ und $R_3$ unabhängig voneinander $C_1$-$C_8$-Alkyl oder gegebenenfalls alkylsubstituiertes $C_6$-$C_{20}$-Aryl sind und "n" für 0 oder 1 steht und

D. 0,05 bis 2,0 Gew.-Teilen, bezogen auf 100 Gew.-Teile Gesamtgewicht aus A. und B., eines Tetrafluorethylenpolymerisats mit Flüorgehalten von 65-76 Gew.-%, mit mittleren Teilchengrößen von 0,05 bis 20 $\mu$m und einer Dichte von 1,2 bis 1,9 g/cm$^3$, wobei die Komponente D. in Form einer koagulierten Mischung von Emulsionen der Tetrafluorethylenpolymerisate D. mit Emulsionen von maximal 3,1 Gew.-Teilen, mindestens jedoch 0,1 Gew.-Teilen, bezogen auf 100 Gew.-Teile der Summe der Komponenten A. und B., von Pfropfpolymerisaten E aus

E.1. 5 bis 90 Gew.-Teilen einer Mischung aus

E.1.1 50 bis 95 Gew.-% Styrol, $\alpha$-Methylstyrol, kernsubstituiertem Styrol, Methylmethacrylat oder Mischungen daraus und

E.1.2 50 bis 5 Gew.-% (Meth)-Acrylnitril, Methylmethacrylat, Maleinsäureanhydrid, N-substituiertem Maleinimid oder Mischungen daraus, auf

E.2. 95 bis 10 Gew.-Teilen eines Kautschuks mit einer Glastemperatur $T_{TG} \leq 10^\circ C$,

eingesetzt wird, und wobei das Gewichtsverhältnis Pfropfpolymerisat E. zum Tetrafluorethylenpolymerisat D. zwischen 95:5 und 60:40 liegt.

**2.** Formmassen gemäß Anspruch 1, dadurch gekennzeichnet, daß die Komponente C. in Mengen von 5 bis 15 Gew.-Teilen vorliegt.

**3.** Formmassen gemäß Ansprüche 1 und 2, dadurch gekennzeichnet, daß die Komponente D. in Mengen von 0,1 bis 1,0 Gew.-Teil vorliegt.

**4.** Formmassen gemäß Ansprüchen 1 bis 3, dadurch gekennzeichnet, daß die Pfropfpolymerisate E. aus 30 bis 80 Gew.-Teilen einer Mischung aus E.1.1 und E.1.2 auf 70 bis 20 Gew.-Teile eines Kautschuks E.2 hergestellt sind.

**5.** Formmassen gemäß Ansprüche 1 bis 4, bestehend aus den Komponenten A., B., C., D. und E. und zusätzlich mindestens einem Zusatz ausgewählt aus der Gruppe der Stabilisatoren, Pigmente, Fließmittel, Entformungsmittel und Antistatika.

**6.** Verfahren zur Herstellung der Formmassen der Ansprüche 1 bis 4, dadurch gekennzeichnet, daß man die Komponenten A., B., C., D. und E. in bekannter Weise vermischt und danach bei Temperaturen von 200° C bis 330° C in gebräuchlichen Aggregaten schmelzcompoundiert oder schmelzextrudiert.

**7.** Verfahren zur Herstellung der Formmassen der Ansprüche 1 bis 4, dadurch gekennzeichnet, daß man Lösungen der Komponenten A., B., C., D. und E. in geeigneten organischen Lösungsmitteln mischt und danach die Lösungsgemische in gebräuchlichen Eindampfaggregaten eindampft.

**8.** Verfahren zur Herstellung der Formmassen des Anspruchs 5 gemäß Ansprüche 6 und 7, dadurch gekennzeichnet, daß man mindestens einen Zusatz, ausgewählt aus der Gruppe der Stabilisatoren, Pigmente, Fließmittel, Entformungsmittel und Antistatika einbezieht.

## Claims

**1.** Thermoplastic moulding compounds consisting of

A. 60 to 90% by weight of a thermoplastic halogen-free aromatic polycarbonate

B. 10 to 40% by weight of a halogen-free thermoplastic copolymer of 50 to 95% by weight styrene, $\alpha$-methyl styrene, nucleus-substituted styrene or mixtures thereof and 5 to 50% by weight (meth)-acrylonitrile

C. 1 to 15 parts by weight, based on 100 parts by weight of the total weight of A. and B., of a halogen-free phosphorus compound corresponding to formula (I)

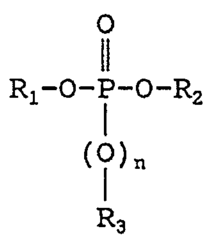

(I)

in which $R_1$, $R_2$ and $R_3$ independently of one another represent $C_{1-8}$ alkyl and optionally alkyl-substituted $C_{6-20}$ aryl and "n" is 0 or 1 and

D. 0.05 to 2.0 parts by weight, based on 100 parts by weight of the total weight of A. and B., of a tetrafluoroethylene polymer having fluorine contents of 65 to 76% by weight, average particle sizes of 0.05 to 20 $\mu$m and a density of 1.2 to 1.9 g/cm$^3$, component D. being used in the form of a coagulated mixture of emulsions of the tetrafluoroethylene polymers D. with emulsions of at most 3.1 parts by weight, but at least 0.1 part by weight, based on 100 parts by weight of the sum of components A. and B., of graft polymers E of

E.1 5 to 90 parts by weight of a mixture of

E.1.1 50 to 95% by weight styrene, $\alpha$-methyl styrene, nucleus-substituted styrene, methyl methacrylate or mixtures thereof and

E.1.2 50 to 5% by weight (meth)acrylonitrile, methyl methacrylate, maleic anhydride, N-substituted maleic imide or mixtures thereof on

E.2 95 to 10 parts by weight of a rubber having a glass temperature $T_{TG}$ of $\leq 10^\circ$ C,

and the ratio by weight of graft polymer E to the tetrafluoroethylene polymer D. being between 95:5 and 60:40.

**2.** Moulding compounds as claimed in claim 1, characterized in that component C. is present in quantities of 5 to 15 parts by weight.

**3.** Moulding compounds as claimed in claims 1 and 2, characterized in that component D. is present in quantities of 0.1 to 1.0 part by weight.

**4.** Moulding compounds as claimed in claims 1 to 3, characterized in that the graft polymers E. are prepared from 30 to 80 parts by weight of a mixture of E.1.1 and E.1.2 on 70 to 20 parts by weight of a rubber E.2.

**5.** Moulding compounds as claimed in claims 1 to 4 consisting of components A., B., C., D. and E. and, in addition, at least one additive selected from the group consisting of stabilizers, pigments, flow aids,

mold release agents and antistatic agents.

6. A process for the production of the moulding compounds claimed in claims 1 to 4, characterized in that components A., B., C., D. and E. are mixed in known manner and the resulting mixture is melt-compounded or melt-extruded in standard units at temperatures of 200 °C to 330 °C.

7. A process for the production of the moulding compounds claimed in claims 1 to 4, characterized in that solutions of components A., B., C., D. and E. in suitable organic solvents are mixed and the resulting solution mixtures are concentrated by evaporation in standard evaporation units.

8. A process as claimed in claims 6 and 7 for the production of the moulding compounds claimed in claim 5, characterized in that at least one additive selected from the group consisting of stabilizers, pigments, flow aids, mold release agents and antistatic agents is incorporated.

## Revendications

1. Matières à mouler thermoplastiques consistant en :
   A. 60 à 90 % en poids d'un polycarbonate aromatique thermoplastique exempt d'halogènes.
   B. 10 à 40 % en poids d'un copolymère thermoplastique, exempt d'halogènes, de 50 à 95 % en poids de styrène, d'α-méthylstyrène, d'un styrène substitué dans le noyau ou d'un mélange de ces monomères, et de 5 à 50 % en poids de (méth)acrylonitrile.
   C. 1 à 15 parties en poids, pour 100 parties en poids de A et B au total, d'un dérivé phosphoré exempt d'halogènes répondant à la formule I

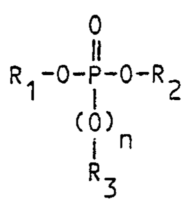

(I)

   dans laquelle $R_1$, $R_2$ et $R_3$ représentent chacun, indépendamment les uns des autres, un groupe alkyle en $C_1$-$C_8$ ou un groupe aryle en $C_6$-$C_{20}$ éventuellement substitué par un groupe alkyle et n est égal à 0 ou 1, et
   D. 0,05 à 2,0 parties en poids, pour 100 parties en poids au total de A et B, d'un polymère du tétrafluoréthylène à une teneur en fluor de 65 à 76 % en poids, une dimension de particule moyenne de 0,05 à 20 µm et une densité de 1,2 à 1,9 g/cm$^3$, le composant D étant mis en oeuvre à l'état de mélange coagulé d'une émulsion du polymère de tétrafluoréthylène D et d'une émulsion de 3,1 parties en poids au maximum, mais d'au moins 0,1 partie en poids, pour 100 parties en poids de la somme des composants A et B, d'un polymère greffé E de
   E.1. 5 à 90 parties en poids d'un mélange de :
   E.1.1 50 à 95 % en poids de styrène, d'α-méthylstyrène, d'un styrène substitué dans le noyau, de méthacrylate de méthyle ou d'un mélange de ces monomères, et
   E.1.2 50 à 5 % en poids de (méth)acrylonitrile, de méthacrylate de méthyle, d'anhydride maléique, d'un maléimide substitué à l'azote ou d'un mélange de ces monomères, sur
   E.2. 95 à 10 parties en poids d'un caoutchouc ayant une température de transition du second ordre $T_{TG}$ inférieure ou égale à 10 °C,
   à des proportions relatives en poids de 95:5 à 60:40 entre le polymère greffé E et le polymère du tétrafluoréthylène D.

2. Matières à mouler selon la revendication 1, caractérisées en ce que le composant C est présent en quantité de 5 à 15 parties en poids.

3. Matières à mouler selon les revendications 1 et 2, caractérisées en ce que le composant D est présent en quantité de 0,1 à 1,0 partie en poids.

4. Matières à mouler selon les revendications 1 à 3, caractérisées en ce que les polymères greffés E sont préparés à partir de 30 à 80 parties en poids d'un mélange de E.1.1 et E.1.2, sur 70 à 20 parties en poids d'un caoutchouc E.2.

5. Matières à mouler selon les revendications 1 à 4, consistant en les composants A, B, C, D et E et en outre au moins un additif choisi dans le groupe des stabilisants, des pigments, des agents fluidifiants, des agents de démoulage et des agents antistatiques.

6. Procédé de préparation des matières à mouler des revendications 1 à 4, caractérisé en ce que l'on mélange les composants A, B, C, D et E de manière connue en soi puis on malaxe à l'état fondu ou on extrude à l'état fondu à des températures de 200 à 330 °C dans des appareils usuels.

7. Procédé de préparation des matières à mouler des revendications 1 à 4, caractérisé en ce que l'on mélange les solutions des composants A, B, C, D et E dans des solvants organiques appropriés puis on évapore le mélange des solutions dans des appareils d'évaporation usuels.

8. Procédé de préparation des matières à mouler de la revendication 5, selon les revendications 6 et 7, caractérisé en ce que l'on utilise au moins un additif choisi dans le groupe des stabilisants, des pigments, des agents fluidifiants, des agents de démoulage et des agents antistatiques.